# DEMANDE DE BREVET EUROPEEN

(11) **EP 4 089 134 A1**
(43) Date de publication de la demande: **16.11.2022**
(21) Numéro de dépôt: 21305618.7
(22) Date de dépôt: 12.05.2021
(51) Int. Cl.: C08G 71/04, C08L 75/04

(54) **POLYURETHANES THERMOPLASTIQUES MODIFIES PAR VOIE FONDUE ET COMPOSITION LES COMPRENANT**

(71) Demandeur: Sorbonne Université, 75006 Paris 6 (FR); Centre national de la recherche scientifique, 75016 Paris (FR)
(72) Inventeur: BOUTEILLER, Laurent, 92340 BOURG LA REINE (FR); LUIZ, Laura, 75015 PARIS (FR); PENSEC, Sandrine, 91430 VAUHALLAN (FR)
(74) Mandataire: Novagraaf Technologies

(57) **Abrégé**

La présente invention a pour objet une composition auto-cicatrisante comprenant un polymère thermoplastique polyuréthane commercial dont les propriétés sont modifiées, par des réactions d'échanges avec un second polymère thermoplastique polyuréthane différent du polymère commercial ou un second polymère non-isocyanate polyuréthane.

## Description

la présente invention concerne une composition auto-cicatrisante de polymères comprenant un polymère thermoplastique polyuréthane (TPU) et un copolymère issu de la modification d'une partie du TPU présent initialement dans la composition. Ladite composition peut être utilisée entre autres, dans la fabrication de joints, de câbles ou de revêtements susceptibles, avec ou sans stimuli externes, notamment de température et/ou de pression, de présenter des propriétés de réparation, dès lors que l'intégrité de la structure des éléments comprenant ladite composition, se trouve fragilisée, altérée, ou présente des zones de fractures ou de coupures, les rendant le plus souvent inutilisables et obligeant à les remplacer.

Le TPU est une matière thermoplastique élastique présentant une forte résistance à l'abrasion et aux produits chimiques. La résistance aux produits chimiques et à l'abrasion des matières plastiques le rend apte aux applications dans des environnements agressifs. On peut citer les joints pour les applications automobiles ou encore pour les machines industrielles, qui sont souvent en TPU qui résiste bien au contact avec l'huile et les carburants. La forte résistance aux chocs de cette matière en fait également une option appréciée pour les revêtements, les coques de protection pour téléphones et autres boîtiers électroniques.

Du fait de leurs propriétés intéressantes, les polymères comprenant une partie uréthane ont tout naturellement été utilisés dans l'obtention de composition présentant des propriétés d'auto-cicatrisation. Dans la demande KR101347245B1 il est décrit une composition de résine de polyuréthane auto-cicatrisante après rayures et un produit moulé fabriqué à partir de celle-ci. Plus spécifiquement, la composition de résine de polyuréthane auto-cicatrisante comprend une résine thermoplastique de polyuréthanne mais également une microcapsule (A) comprenant un composé de silicone fonctionnalisé par des groupes vinyle et une microcapsule (B) comprenant un composé de silicone fonctionnalisé par des groupes hydrure et un catalyseur métallique. Le produit moulé à base de polyuréthane empêche la libération de matériaux volatils tout en conservant d'excellentes propriétés mécaniques et des sensations de toucher doux, il présente également une excellente résistance aux rayures tout en ayant des propriétés d'auto-cicatrisation et peut être utilisé dans les matériaux de surface d'un composant intérieur de véhicule automobile.

D'autres exemples de compositions auto-cicatrisantes sont décrits dans la demande WO2020025893 qui a pour objet une composition auto-cicatrisante comprenant au moins une matrice élastomère comprenant un segment choisi parmi les polysiloxanes, les polyesters, les polyéthers, les polycarbonates, et les polyoléfines et un segment polyurée ou polyuréthane, et au moins un matériau polymère en tant qu'additif de cicatrisation. L'application de ces compositions permet de réaliser un câble électrique et/ou optique, présentant des propriétés d'auto-cicatrisation remarquables.

Un des inconvénients majeurs de ces compositions auto-cicatrisantes est la difficulté d'industrialisation des procédés de synthèse du fait de l'utilisation de réactifs souvent toxiques tel que l'iodure de méthyle ou l'utilisation de solvants tels le tétrahydrofurane ou le dichlorométhane, limitant le scale-up de la synthèse de ces compositions. Il est donc nécessaire d'envisager de nouvelles alternatives permettant de ne plus utiliser de solvants, voire de réduire au maximum leur présence ainsi que de limiter l'utilisation de réactifs toxiques afin de répondre aux besoins des industriels. De plus, il existe toujours un besoin de nouvelles compositions qui, tout en palliant ces inconvénients, présenteraient également des propriétés auto-cicatrisantes améliorées ou à tout le moins équivalentes à ce que l'on rencontre dans l'état de l'art.

Un des objets de la présente invention est la préparation d'une composition de polymères comprenant une étape de mélange d'un premier polymère thermoplastique polyuréthane non auto-cicatrisant avec un second polymère thermoplastique polyuréthane auto-cicatrisant à une température suffisante pour provoquer le changement de microstructure desdits polymères pendant une durée supérieure ou égale à 1 minute.
Le terme « auto-cicatrisant » au sens de la présente invention, désigne un matériau présentant des propriétés de réparation intrinsèque lorsqu'il est endommagé, et ce dès lors que l'intégrité de la structure des éléments comprenant ledit matériau, se trouve fragilisée, altérée, ou présente des zones de fractures ou de coupures, les rendant le plus souvent inutilisables et obligeant à les remplacer.
De manière préférée, le procédé comporte une étape de mélange d'un premier polymère thermoplastique polyuréthane (TPU) avec au moins un polymère sélectionné parmi un second polymère thermoplastique polyuréthane différent du premier TPU, qualifié de TPU', et un second polymère non isocyanate polyuréthane, désigné par l'acronyme NIPU.

De manière surprenante, il a été mis en évidence qu'une composition particulière, comprenant un TPU et un copolymère issu de la modification d'une partie du TPU présent initialement dans la composition, présentait les propriétés recherchées d'auto-cicatrisation. Ladite modification étant avantageusement le fruit d'une réaction d'échange d'une partie du TPU présent initialement dans la composition avec au moins un autre polymère fonctionnalisé, celui-ci pouvant être un polymère non isocyanate polyuréthane (NIPU) et/ou un TPU différent du TPU majoritairement présent dans la composition.

Plus particulièrement, le premier polymère TPU, qui peut être un polyuréthane disponible dans le commerce, ne présente pas de propriété auto-cicatrisantes, le second polymère thermoplastique polyuréthane (TPU') présente des propriétés d'auto-cicatrisation et le polymère non isocyanate thermoplastique (NIPU) peut présenter éventuellement des propriétés d'auto-cicatrisation, et de préférence le NIPU présente des propriétés d'auto-cicatrisation intrinsèque.

Le procédé est avantageusement réalisé par le mélange du TPU avec au moins l'un des ingrédients sélectionnés parmi le TPU' et le NIPU, en maintenant la température du milieu réactionnel de 150 à 250°C pendant une durée de 1 minute à 1 heure.

Le procédé est mis en œuvre de préférence par voie fondue, avantageusement au sein d'un extrudeur comprenant un réacteur continu, qui consiste dans un premier temps à mélanger qui consiste dans un premier temps à mélanger le premier polymère thermoplastique polyuréthane (TPU) en présence d'un polymère sélectionné parmi au moins le second polymère thermoplastique polyuréthane différent du premier TPU (TPU') et le second polymère non isocyanate polyuréthane (NIPU). La seconde étape dudit procédé consiste à porter le mélange à une température comprise entre 150 et 250°C, et dans un troisième temps de maintenir le mélange constitué au sein du réacteur pendant une durée de 1 min à 60 minutes, puis finalement de récupérer à la sortie de l'extrudeur le mélange obtenu.
Dans le cadre de l'invention, le terme « polymère thermoplastique polyuréthane » également dénommé par l'acronyme « TPU », qualifie une molécule de polymère polyuréthane comportant au moins une fonction sélectionnée parmi la fonction carbamate (-O-CO-NR-), la fonction thiocarbamate (-S-CO-NR'-) et la fonction carbamide (-R"N-CO-NR'"-), laquelle fonction carbamide étant parfois qualifiée de fonction « urée », dans les motifs monomères (fragments répétitifs) du polymère.
Au sens de la présente invention les termes « non- isocyanate » qualifie un polymère ne comportant pas de fonction chimique préparée à partir de molécules comportant au moins une fonction isocyanate. Plus particulièrement, dans le cadre de l'invention, le terme « polymère non isocyanate polyuréthane » également dénommé par l'acronyme « NIPU », qualifie un polyuréthane ne comportant pas de fonction isocyanate (-N=C=O) et qui n'est pas préparé à partir de réactifs comportant une telle fonction isocyanate, et en particulier un polyuréthane ne comportant pas une telle fonction isocyanate en bout de chaîne.
Le terme « réacteur continu », définit un réacteur ouvert c'est-à-dire non fermé par son entrée et sa sortie, et par lequel transite la matière injectée en continue en vue de sa transformation au sein dudit réacteur.
Au sens de l'invention on entend par « changement de microstructure », la modification de la structure initiale d'un TPU par adjonction d'une nouvelle molécule en son sein. En effet les TPU sont composés de segments souples (polyéther/polyester) et de segments rigides caractérisés par la présence de liaisons hydrogène des fonctions uréthane. Ces deux types de segments induisent une orientation et une association à l'échelle du nanomètre qui apportent une organisation au réseau TPU. A l'échelle nano-microscopique, ces interactions supramoléculaires forment une microséparation de phase qui confère au matériau des propriétés physico-chimiques intéressantes (résistance à l'abrasion, aux déchirures etc...), mais ne permet pas l'auto-cicatrisation, malgré la présence d'interactions réversibles. La modification des TPU est basée sur les réactions d'échange à haute température entre les fonctions uréthanes présentes dans les TPU et un second polymère entraînant une modification ou un changement de la microstructure du TPU initialement présente au sein du TPU, lui conférant ainsi des propriétés d'auto-cicatrisation.

Au sens de l'invention :
- Par aryle on entend un groupe fonctionnel qui dérive d'un hydrocarbure aromatique ou arène par remplacement d'un hydrogène sur le cycle aromatique. Chaque type de substituant porte un nom spécifique défini par la nomenclature IUPAC, comme phényle pour le groupe fonctionnel dérivé du benzène. Le terme aryle est un terme générique utilisé pour désigner de manière générale un substituant aromatique. On citera comme groupement aryle sans être limitatif le groupe phényle, C₆H₅-, le groupe tolyle, -C₆H₄CH₃, dérivé du toluène, ou encore le groupe xylyle, -C₆H₃(CH₃)₂, dérivé du xylène.
- Par diaryle on entend au sens de la présente demande au moins deux groupes aromatiques pouvant être fusionné l'un à l'autre, ou lié entre eux par une liaison directe ou par un ou plusieurs atome(s) de carbone(s), on citera par exemple, sans être limitatif les groupes suivants : 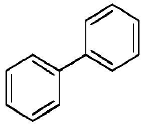 ou encore 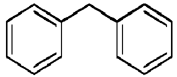 ou encore 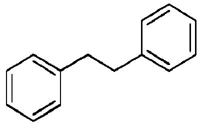
- Par alkyl on entend un atome de carbone ou une chaîne linéaire ou ramifiée composée de plusieurs carbones ne portant aucune insaturation on citera sans être limitatif les groupes méthyle, éthyle, propyle, butyle ou encore isobutyle ou isopropyle.
- Par arylalkyl on entend un groupement alkyl tel que définit précédemment dont un atome de carbone du groupe alkyl est substitué par un groupement aryle tel que définit précédemment on citera sans être limitatif le groupe suivant : 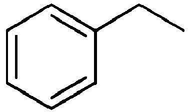 ou encore 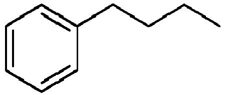
- Par cycloalkyl on entend un composé cyclique constitué d'atomes de carbone formant un ou plusieurs cycles ne présentant aucune insaturation on citera par exemple sans être limitatif les groupes suivants : 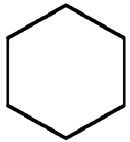 ou encore 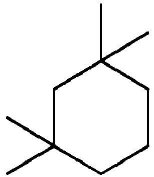
- Par di(cycloalkyl) on entend deux groupes cycloalkyl étant liés directement ou par au moins un atome de carbone on citera sans être limitatif les groupes suivants : 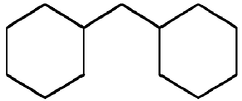
- Par hydroxy on entend le groupe -OH.
- Par hydroxyalkyl on entend un alkyl tel que défini précédemment dans lequel un atome de carbone supporte un groupement -OH.
- Par alkyloxy on entend un groupement -O-Alkyl, ou le groupement alkyl est tel que défini précédemment, on citera comme exemple sans être limitatif le groupe méthoxy - O-CH₃ ou encore éthoxy O-CH₂-CH₃.
- Par halogène on entend les éléments chimiques que sont le fluor, le chlore, le brome ou encore l'iode.
- Par cyano on entend le groupe -CN représenté 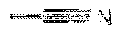 ainsi Par nitro on entend le groupement -NO₂.
- Par thioalkyle on entend un alkyl tel que défini précédemment dans lequel un atome de carbone supporte un groupement -SH.
- Par alkylthio on entend un groupement -S-Alkyl, ou le groupement alkyl est tel que défini précédemment, on citera comme exemple sans être limitatif le groupe -S-CH3 ou encore -S-CH2-CH3.

Les TPU, ou encore les polyuréthanes thermoplastiques, sont une catégorie de plastiques créés par une réaction de polyaddition entre un diisocyanate et un ou plusieurs diols. Ils peuvent être utilisés comme un plastique flexible, ou en remplacement des caoutchoucs rigides. Ils présentent entre autres une résistance à la traction élevée, ainsi qu'une excellente résistance à l'abrasion mais également d'excellentes propriétés mécaniques avec une élasticité similaire à celle des caoutchoucs. A l'échelle moléculaire, les polyuréthanes thermoplastiques (TPU) présentent des segments souples (polyether, polyester), et segments rigides caractérisés par la présence de liaisons hydrogènes des fonctions uréthanes. Ces deux types de segments induisent une ségrégation et une association à l'échelle du nanomètre qui apporte une organisation au réseau TPU. A l'échelle nano-microscopique, ces interactions supramoléculaires forment une micro-séparation de phase et confère au matériau des propriétés physico-chimiques intéressantes mais ne permettant pas l'auto-cicatrisation malgré la présence d'interactions réversibles.

Il existe un nombre important de TPU dans le commerce et ceux-ci sont relativement peu chers. Les TPU (ou PU) sont des thermoplastiques élastomères qui allient les propriétés élastiques des élastomères et les propriétés mécaniques des plastiques.
La principale propriété du PU est son excellente résistance à l'abrasion et à l'usure, ce qui en fait la principale matière pour les joints usinés destinés aux applications hydrauliques ou pneumatiques. Pour autant s'ils viennent à casser ou subir des dommages ils ne possèdent pas de propriétés auto-cicatrisantes. Ainsi il est intéressant d'obtenir de nouvelles compositions à partir de TPU commerciaux permettant de leur conférer des propriétés auto-cicatrisantes.

Un des avantages de la présente invention consiste à utiliser un extrudeur réacteur permettant l'obtention de composition à base de TPU sans avoir besoin de solvants. Les extrudeuses sont traditionnellement utilisées pour la transformation des polymères. Elles sont composées principalement d'une ou plusieurs vis sans fin qui tournent à l'intérieur d'un fourreau permettant ainsi un brassage des polymères introduits. Ainsi, le procédé d'extrusion est utilisé généralement à des fins de mélange et de mise en forme de matériaux. Ce procédé est également utilisé dans un cadre réactif, en particulier pour des réactions de polymérisation ou l'extrudeuse peut être utilisée comme réacteur de polymérisation, on parle alors dans ce cas d'extrusion réactive ; l'extrudeuse se comporte alors comme un réacteur chimique.

L'extrusion réactive permet de réaliser des économies en termes de consommation de matières premières, de réactifs, d'énergie et demande des investissements moins lourds. Elle est donc à la fois plus écologique et plus économique en termes de coûts d'exploitation avec une consommation énergétique réduite. Les procédés d'extrusion réactive offrent de nombreux avantages comme un procédé continu avec des temps de réaction rapides et des temps de séjour courts, la technologie est plus sûre car la réaction est confinée et réalisée dans un volume réactionnel faible. Les températures de réactions utilisées sont généralement de l'ordre de 150 et 250 °C ce qui reste raisonnable d'un point de vue de la synthèse chimique.

L'extrusion réactive peut se faire dans un extrudeur-réacteur bivis, les réactions sont mises en œuvre en phase homogène ce qui permet une polymérisation en masse, siège de modifications chimiques des polymères présents via des réactions de greffage, réticulation, fonctionnalisation, dépolymérisation, ou d'échange. On entend dans le cadre de la présente invention par échange, la modification d'une partie d'un premier polymère le plus souvent commercial, en présence d'un second polymère différent du premier polymère. Le second polymère s'intégrant dans le premier polymère ce qui conduit à une composition dont les propriétés du premier polymère se trouvent modifiées et lui conférent de nouvelles propriétés.

De préférence, dans le procédé selon l'invention le premier polymère thermoplastique a pour formule, la formule (I) qui sera désignée de manière équivalente par « -[uTPU]ₚ-» dans la suite de la présente description, et p est étant tel que la masse molaire moyenne en nombre Mn du polymère est comprise entre 1 et 500 kg/mol. Le composé de formule (I) correspondant à la formule développée suivante : 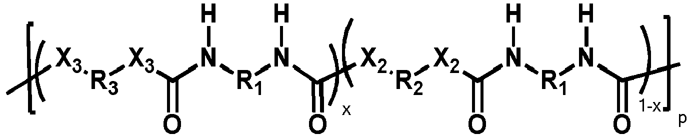 dans laquelle :
R₁ représente un groupe aryle constitué de 6 à 30 atomes de carbone, un groupe diaryle constitué de 6 à 15 atomes de carbone, préférentiellement 6 à 13 atomes de carbone, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 4 à 15 atomes de carbones, les dits groupe aryle et cyclo alkyl étant optionnellement substitué par au moins un substituant sélectionné parmi les groupes alkyl, alkyloxy, halogène, cyano, nitro, thioalkyl, alkylthio ;
R₂ représente un groupe polyoléfine, polysiloxane, polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, ou un groupe -CH=CH-, un groupe -O-C(O)-, un groupe éthynyl ;
X₂ et X₃ représentent indépendamment au moins un élément sélectionné parmi un atome O, S et un groupe N-H ;
   x est un nombre compris entre 0 et 1.

Dans le cadre de la présente invention, Le terme « uTPU », désigne une unité élémentaire du polymère de polyuréthane thermoplastique, ladite unité élémentaire correspondant au motif moléculaire répété p fois dans le polymère de TPU, lequel polymère peut être représenté par la formule [uTPU]ₚ.
Au sens de l'invention le terme « masse molaire moyenne en nombre », aussi désigné par « Mn », définit la moyenne des masses molaires pondérée par le nombre de chaînes de chaque longueur, et correspond à la masse molaire d'une chaîne de longueur moyenne (Mn est également connu pour être le rapport de la masse totale des chaînes constituants ledit polymère mesurée sur un échantillon donné, W, sur le nombre de chaînes de polymère N dudit échantillon).

De préférence, dans le procédé selon l'invention le second polymère thermoplastique polyuréthane a pour formule, la formule (IIIb) qui sera désignée de manière équivalente par « -[uTPU']ₘ-» dans la suite de la présente description, et le second polymère non isocyanate polyuréthane a pour formule la formule (IIIa), qui sera désignée de manière équivalente par «-[uNIPU]ₘ-» dans la suite de la présente description. Le second polymère thermoplastique de formule (IIIb) étant différent du premier TPU. De préférence, la concentration du polymère de formule (I) est toujours supérieure à celle du second polymère représenté par les composés de formule (IIIb) ou (IIIa). De manière alternative ou en combinaison avec ce qui précède, le second polymère est avantageusement présent à hauteur de 0,05 à 80% en poids par rapport au poids du premier polymère thermoplastique, préférentiellement de 0,05 à 60%, encore plus préférentiellement de 0.05 à 40%, voire de 0.05 à 30%.
Dans le cadre de la présente invention, Le terme « uTPU' », désigne une unité élémentaire du second polymère de polyuréthane thermoplastique, ladite unité élémentaire correspondant au motif moléculaire répété m fois dans le second polymère de TPU, lequel polymère peut être représenté par la formule [uTPU']ₘ.
Dans le cadre de la présente invention, Le terme « uNIPU », désigne une unité élémentaire du polymère non isocyanate polyuréthane, ladite unité élémentaire correspondant au motif moléculaire répété m fois dans le polymère de NIPU, lequel polymère peut être représenté par la formule [uNIPU]ₘ.

Dans le procédé selon l'invention une partie du polymère de formule (I) (-[uTPU]ₚ-) réagit avec les composés de formule (IIIa) (-[uNIPU]ₘ-), ou (IIIb) (-[uTPU']ₘ-) et subit une réaction d'échange.

La résultante de la mise en œuvre du procédé selon l'invention, permet d'obtenir un autre objet de l'invention à savoir une composition comprenant en mélange : un polymère thermoplastique polyuréthane de formule (I)

-[uTPU]ₚ-

et un second polymère de formule (II)

-[X]_{m'}-[uTPU]_{p'}-

dans laquelle, X est l'unité élémentaire répétitive du composé de formule (IIIa) ou (IIIb) et dans laquelle p et m' et p' sont, de préférence, tels que la masse molaire moyenne en nombre des polymères présents dans la composition est comprise entre 1 et 500 kg/mol.
Le second polymère de formule (II) est un copolymère comportant des sous-unités monomères (ou unités élémentaires, « uTPU ») du premier polymère et des sous-unités monomères «X» d'un autre polymère de formule (IIIa) ou (IIIb), ledit copolymère comprenant plus particulièrement les deux types de monomères enchaînés de manière aléatoire, alternées (périodique : ...-X-uTPU...), statistique, en bloc, dans une chaîne linéaire du second polymère. De manière préférée, les deux sous-unités monomères sont ordonnées de manière à former un copolymère en bloc; ces copolymères à structure hétérogène sont issus du greffage, ou de l'échange, sur un homopolymère (comportant des chaînes composées de monomères uTPU) de chaînes d'au moins un autre homopolymère (comportant des chaînes composées de monomères X). Le second polymère de formule (II) est avantageusement obtenu par une réaction d'échange, telle que décrite précédemment dans le cadre de l'invention.

De préférence, le composé NIPU de formule (IIIa) correspond à la formule développée suivante : 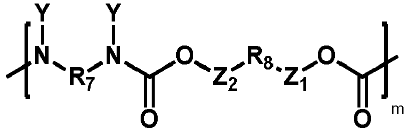 dans laquelle :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyéther ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyether ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
Z₁ et Z₂ représentent les motifs suivants :

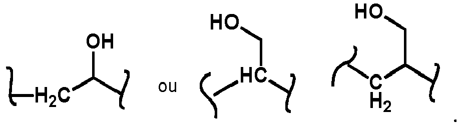

De préférence, le composé de formule (IIIa) correspond à la formule développée suivante : 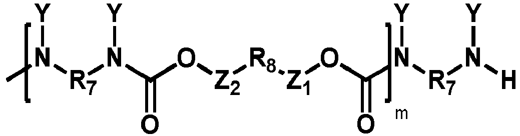 R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH, nitro, thioalkyle, alkylthio, un groupe polyéther ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, -SH, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyether ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
Z₁ et Z₂ représentent les motifs suivants :

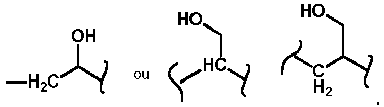

De préférence, le polymère thermoplastique de formule -[uTPU']ₘ- de formule (IIIb) a la formule développée suivante : 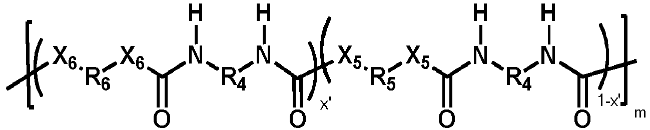 dans laquelle :
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacés par au moins un atome O, S, ou un groupe -CH=CH-, un groupe -O-C(O)-, un groupe éthynyl ;
R₆ représente une chaîne alkyle comprenant 1 à 6 atomes de carbone, groupe polyoléfine, polysiloxane, polyéther, polycarbonate, polyester, un copolymère polyester-polyéther ou un mélange de ceux-ci ;
X₅ représente au moins un élément sélectionné parmi un atome O et la fonction N-Yi;
X₆ représente un atome au moins un élément sélectionné parmi un atome O et la fonction N-Y1 ;
Y₁ représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ; et
x' est un nombre compris entre 0 et 1.

De préférence, le polymère thermoplastique de formule -[uTPU']ₘ- de formule (IIIb) à la formule développée suivante : 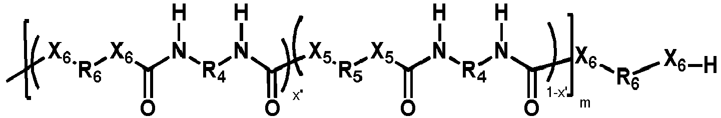 dans laquelle :
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacé par au moins un atome O, S, ou un groupe -CH=CH-, un groupe -O-C(O)-, un groupe éthynyl ;
R₆ représente une chaîne alkyle comprenant 1 à 6 atomes de carbone, un groupe polyoléfine, polysiloxane, polyéther, polycarbonate, polyester, un copolymère polyester-polyéther ou un mélange de ceux-ci ;
X₅ représente au moins un élément sélectionné parmi un atome O et la fonction N-Yi;
X₆ représente au moins un élément sélectionné parmi un atome O et la fonction N-Y₁ ;
Y₁ représente indépendamment un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ; et x' est un nombre compris entre 0 et 1.

De préférence, pour les polymères de formule (IIIa) les définitions des groupes R₇, R₈, Z₁ et Z₂ sont telles que définies précédemment à l'exception de Y qui représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio et dans laquelle tous les groupes Y de ladite formule (IIIa) ne peuvent être simultanément un hydrogène.

De préférence, pour les polymères de formule (IIIb) les définitions des groupes R4, R5, R6, X5 et X6 sont telles que définies précédemment à l'exception de Y1 qui représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthioet dans laquelle les groupes Y1 de ladite formule (IIIb) ne peuvent être simultanément un atome d'hydrogène.

Le polymère de formule (IIIa) en se substituant à une partie du polymère de formule (I) présent au sein de l'extrudeur réacteur continu par une réaction d'échange conduit avantageusement au sein du mélange, à la formation d'un polymère (II) (formule (IIa)) ayant pour formule développée la formule suivante : 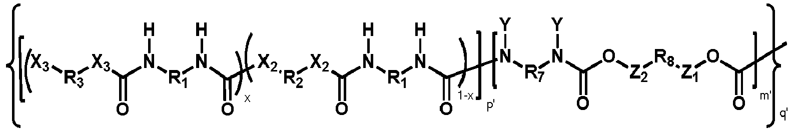 dans laquelle :
R₁ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH, nitro, thioalkyle, alkylthio ;
R₂ représente un groupe polyoléfine, polysiloxane, polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, ou un groupe -CH=CH-, un groupe -O-C(O)-, un groupe ethynyl ;
X₂ et X₃ représentent indépendamment au moins un élément sélectionné parmi un atome O, S et un groupe N-H ; et
x est un nombre compris entre 0 et 1.
R₇ représente un groupe aryle constitué de 6 à 10 atomes de carbone, un groupe diaryle constitué de 6 à 10 atomes de carbone les deux groupes aryle étant liés directement ou par au moins un atome de carbone, un groupe cyclo alkyl constitué de 6 à 10 atomes de carbones, un groupe cyclo alkyl constitué de 6 à 10 atomes de carbone les deux groupes cyclo alkyl étant liés directement ou par au moins un atome de carbone, un groupe alkyl ou alcoxyle constitué de 2 à 15 atomes de carbones, les dits groupe aryle et cyclo alkyl étant optionnellement substitué par au moins un substituant sélectionné parmi les groupes alkyl, , alkyloxy, halogène, cyano, nitro, thioalkyle, alkylthio, un groupe polyether ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, -SH, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyether ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ; et
Z₁ et Z₂ représentent les motifs suivants :

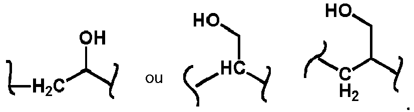

De préférence, pour le composé de formule (II) les définitions des groupes R₁, R₂, R₃, X₂, X₃, x, R₇, R₈, Z₁ et Z₂ sont telles que définies précédemment à l'exception de Y qui représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, - SH, nitro, thioalkyle, alkylthio et dans laquelle tous les groupes Y de ladite formule (IIIa) ne peuvent être simultanément un hydrogène.

Le polymère de formule (IIIb) en se substituant à une partie du polymère de formule (I) présent au sein de l'extrudeur réacteur continu par une réaction d'échange conduit avantageusement au sein du mélange, à la formation d'un polymère (II) (formule (IIb)) ayant pour formule développée la formule suivante : 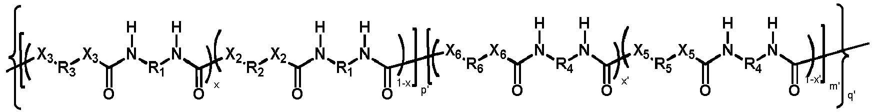 dans laquelle :
R₁ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH, nitro, thioalkyle, alkylthio ;
R₂ représente un groupe polyoléfine, polysiloxane, polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, ou un groupe -CH=CH-, un groupe -O-C(O)-, un groupe éthynyl ;
X₂ et X₃ représentent indépendamment au moins un élément sélectionné parmi un atome O, un atome S et un groupe N-H ;
x est un nombre compris entre 0 et 1 ; et
x' est un nombre compris entre 0 et 1.
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacés par au moins un atome O, S, ou un groupe -CH=CH-, un groupe -O-C(O)-, un groupe éthynyl ;
R₆ représente une chaîne alkyle comprenant 1 à 6 atomes de carbone, un groupe polyoléfine, polysiloxane, polyéther, polycarbonate, polyester, un copolymère polyester-polyéther ou un mélange de ceux-ci ;
X₅ représente un au moins un élément sélectionné parmi un atome O et un groupe N-Y₁ ;
X₆ représente un au moins un élément sélectionné parmi un atome O et un groupe N-Y₁ ; et
Y₁ représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio.

De préférence, pour les polymères de formule (II) les définitions des groupes R₁, R₂, R₃, X₂, X₃, x, x', R₄, R₅, R₆, X₅ et X₆ sont telles que définies précédemment à l'exception de Y₁ qui représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio et dans laquelle les groupes Y₁ de ladite formule (IIIb) ne peuvent être simultanément un atome d'hydrogène.

La composition obtenue par la mise en œuvre du procédé selon l'invention est avantageusement formulée à la sortie par ajout d'au moins un antioxydant, un agent de démoulage, un pigment, un ignifugeant, une charge inorganique, notamment choisi parmi la silice, préférentiellement sous forme de quartz, le talc, le carbonate de calcium, le noir de carbone, et un de leurs mélanges.

La composition obtenue par la mise en œuvre du procédé selon l'invention est avantageusement une composition dite mixte à savoir qu'elle comprend un composé de formule (I) et un composé de formule (II) dans laquelle le composé de formule (II) est issu d'un mélange entre le polymère de formule (I) qui a subi une réaction d'échange avec le polymère de formule (IIIa) et le polymère de formule (I) qui a subi une réaction d'échange avec le polymère de formule (IIIb).

La composition obtenue par la mise en œuvre du procédé selon l'invention trouve avantageusement son utilité dans des dispositifs ou des pièces constitutives d'un système. Elle se présente avantageusement sous forme de joint, de câbles, de pièces automobiles, de moules, de protection pour écrans mobiles ou fixes de bandes transporteuses, de protections anti-chocs, de gants professionnels, de revêtements, notamment anti-corrosion, des métaux, ou d'additifs dans le domaine des adhésifs, bitumes, liants organiques, peintures, vernis, pâtes et mastics.

Un autre objet de l'invention correspond à l'utilisation d'une composition selon l'invention dans la fabrication de dispositif ou pièces tel que décrit précédemment. En outre la composition selon l'invention présente des propriétés auto-cicatrisantes en présence de stimuli tel que la température ou la pression.

De préférence, le composé de formule (IIIa) qui est un polymère NIPU a pour formule développée 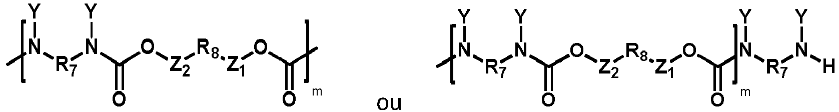 dans lequel :
R₇ représente un groupe alkyl ou alcoxyle constitué de 2 à 15 atomes de carbones, un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)2-, -C(O)-, -C(Alkyl en C1-C6)2- dans lequel le groupe alkyl est optionnellement substitué par un groupe -OH, un groupe polyether ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ; et
Z₁ et Z₂ représentent les motifs suivants :

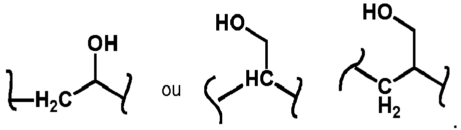

De préférence, les composés de formule (I) ont la structure développée suivante :

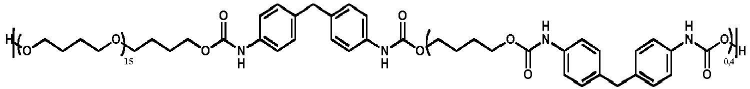

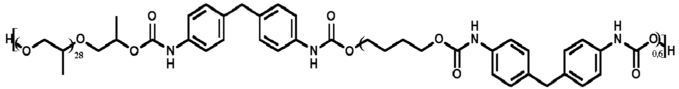

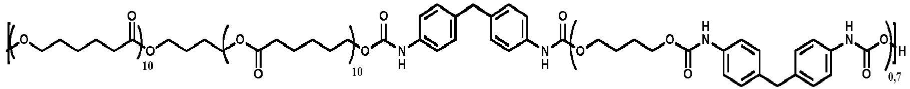

De manière particulièrement préférée les NIPU et TPU' ont la formule développée suivante :

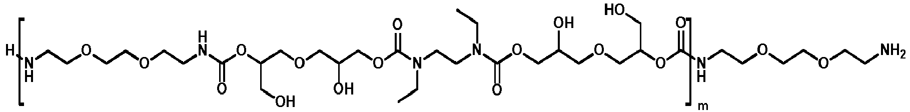

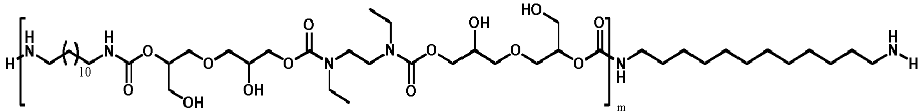

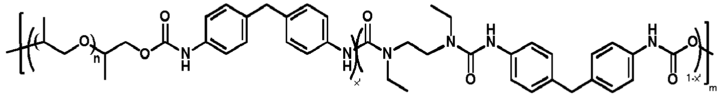

### Description détaillée de l'invention et partie expérimentale

La mise en œuvre de l'invention consiste en plusieurs étapes à savoir qu'au sein de l'extrudeur réacteur on introduit le premier polymère TPU en présence d'un second polymère thermoplastique polyuréthane différent du premier TPU ou d'un second polymère non isocyanate polyuréthane (NIPU). L'ordre de mélange importe peu. Les deux polymères pouvant être sous forme solide et/ou liquide. On porte alors le mélange à une température comprise entre 150 et 250 °C et ce pendant une durée pouvant aller de 1 min à 60 minutes, préférentiellement 20 min, encore plus préférentiellement 5 minutes et l'on récupère à la sortie de l'extrudeur le mélange obtenu. Dans le cadre de la présente invention, la quantité du premier polymère excède toujours la quantité du second polymère au sein du réacteur permettant à ce que la réaction d'échange prenne place. La résultante de la mise en œuvre du procédé selon l'invention conduit à une composition comprenant majoritairement le premier polymère et une partie de celui-ci dont la structure a été modifiée par l'insertion du second polymère.

Le premier polymère thermoplastique qui a pour formule, la formule (I) : - [uTPU]ₚ-, dans lequel p est tel que la masse molaire moyenne en nombre Mn du polymère est comprise entre 1 et 500 kg/mol est ainsi au sein de l'extrudeur mélangé avec un second polymère différent du premier polymère, celui-ci peut être un autre (à savoir différent du premier) polymère thermoplastique polyuréthane qui a pour formule, la formule (IIIb) -[uTPU']ₘ- ou un polymère non isocyanate polyuréthane qui a pour formule la formule (IIIa) -[uNIPU]ₘ-. Le second polymère est présent au sein de l'extrudeur à hauteur de 0,05 à -80% en poids par rapport au poids du premier polymère thermoplastique, préférentiellement de 0,05 à 60%, encore plus préférentiellement de 0.05 à 40%, voire de 0.05 à 30%.

La composition obtenue par la mise en œuvre du procédé selon l'invention comprend en mélange au final deux polymères à savoir un polymère majoritaire thermoplastique polyuréthane de formule (I) selon

-[uTPU]ₚ-

et un second polymère de formule (II)

-[X]_{m'}-[uTPU]_{p'}-

dans laquelle, X est le composé de formule (IIIa) ou (IIIb) et dans laquelle p et m et p' sont tels que la masse molaire moyenne en nombre Mn des polymères présents dans la composition est comprise entre 1 et 500 kg/mol. En outre la composition peut contenir un reliquat ou une partie du premier polymère, partie qui correspond à la réaction d'échange avec le second polymère et le premier polymère.
Le composé X venant se substituer via une réaction d'échange ou s'additionner sur le TPU de formule (I). Pour ce faire le second polymère comprend une fonction amine secondaire et/ou amine primaire suffisamment réactive dans la mise en œuvre de procédé et lui permettant d'intégrer une partie du polymère de formule (I).

La résultante de la composition selon l'invention est qu'elle permet de maintenir les propriétés classiques des TPU commerciaux tout en leur apportant en modifiant partiellement la structure du TPU commercial de nouvelles propriétés à savoir des propriétés auto-cicatrisantes ce qui constitue un avantage de ladite invention par rapport aux compositions thermoplastiques polyuréthanes de l'état de la technique.

Le mélange selon l'invention est donc placé dans une extrudeuse à titre d'exemple sans que cela ne soit limitatif on citera comme extrudeuse utilisable pour mettre en œuvre le procédé selon l'invention, les extrudeuses Evolum de la société Clextral permettant des synthèses à grande échelle ou encore des extrudeuses comme le Thermo Scientific HAAKE Minilab II de la société Rheology solutions permettant de traiter des échantillons plus petits allant jusqu'à 5g de matière.

Selon que l'on utilise comme polymère les composés de formule (IIIa) ou (IIIb) pour réagir avec le TPU de formule I, la composition qui en résulte après la mise en œuvre du procédé selon l'invention, n'est pas la même. Ainsi en utilisant le composé (IIIa) et le TPU de formule (I) on obtient une composition que nous appellerons composition A, en utilisant un composé de formule (IIIb) et le composé de formule (I) on obtient une composition B différente de la composition A. Les compositions A et B ainsi obtenues, peuvent être mélangées en une composition C, comprenant une proportion de la composition A et de la composition B. La proportion entre les compositions (A) et (B) peut varier selon un ratio allant de 99% de composition (A)/ 1% de composition (B) à 1% de composition (A)/ 99% de composition (B). Les pourcentages étant exprimé en pourcentage massique par rapport à la masse totale de polymère présent dans le mélange A+B.

Il est intéressant de noter que du fait de la réactivité des fonctions amines primaires et/ou secondaires des NIPU et TPU' de formule (IIIb), l'utilisation au sein d'une extrudeuse de base organique activant lesdites fonctions amines primaires et/ou secondaires vis-à-vis des composés de formule (I), n'est pas nécessaire. Cet avantage permet de réduire les purifications en sortie d'extrudeuse.

La composition obtenue par la mise en œuvre du procédé selon l'invention peut en fonction comprendre en outre au moins une charge inorganique, notamment choisi parmi la silice, préférentiellement sous forme de quartz, le talc, le carbonate de calcium, le noir de carbone, et un de leurs mélanges. La charge inorganique peut permettre de renforcer les propriétés mécaniques de la composition. La silice, et en particulier le quartz, en tant que charge inorganique est préférée. D'autres additifs pour permettre de formuler la composition obtenue par la mise en œuvre du procédé selon l'invention, peuvent être envisagés par un homme de l'art dans le domaine de la fabrication des élastomères ou des plastiques.

Comme indiqué précédemment le composé de formule (I) est un TPU commercial et dont la masse molaire moyenne en nombre Mn du polymère est comprise entre 1 et 500kg/mol. Celui-ci a pour formule développée la formule suivante : 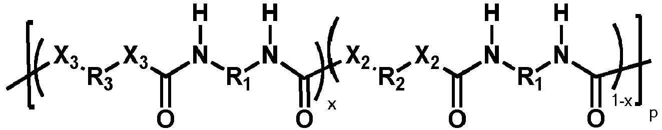 dans laquelle :
R₁ représente un groupe aryle constitué de 6 à 30 atomes de carbone, un groupe diaryle constitué de 6 à 15 atomes de carbone, préférentiellement 6 à 13 atomes de carbone, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 4 à 15 atomes de carbones, les dits groupe aryle et cyclo alkyl étant optionnellement substitué par au moins un substituant sélectionné parmi les groupes alkyl, alkyloxy, halogène, cyano, nitro, thioalkyl, alkylthio ;
R₂ représente un groupe polyoléfine, polysiloxane, polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, N-H, ou un groupe - CH=CH-, un groupe -O-C(O)-, un groupe éthynyl ;
X₂ et X₃ représentent indépendamment un atome O, S, un groupe N-H ou un mélange O / N-H / S ; et
x est un nombre compris entre 0 et 1.
Et, de manière encore plus préférée :
   R₁ représente un groupe aryle constitué de 6 à 15 atomes de carbone, un groupe diaryle constitué de 10 à 15 atomes de carbone, les deux groupes aryle étant liés par un atome de carbone, un groupe cycloalkyl constitué de 6 à 10 atomes de carbones, un groupe di(cycloalkyl) constitué de 10 à 15 atomes de carbone les deux groupes cycloalkyl étant liés par un atome de carbone, un groupe alkyl constitué de 4 à 15 atomes de carbones ;
   R₂ représente un groupe polyoléfine, polysiloxane, polyéther, polycarbonate, polyester, un copolymère polyester-polyéther ou un mélange de ceux-ci ;
   R₃ représente un groupe cycloalkyl ou aryl ou une chaîne alkyle ou comprenant 2 à 20 atomes de carbone ;
   X₂ et X₃ représentent indépendamment un atome O, un groupe N-H ou un mélange O / N-H ;
   x est un nombre compris entre 0 et 1.

De manière plus préféré :
R₁ représente un groupe aryle constitué de 7 atomes de carbone, un groupe diaryle constitué de 13 atomes de carbone, les deux groupes aryle étant liés par un atome de carbone, un groupe di(cycloalkyl) constitué de 13 atomes de carbone les deux groupes cycloalkyl étant liés par un atome de carbone, un groupe alkyl constitué de 6 atomes de carbones ;
R₂ représente un groupe polyoléfine, polysiloxane, polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone ;
X₂ et X₃ représentent un atome O ; et
x est un nombre compris entre 0 et 1.

De préférence également avec ce qui précède directement :
R₁ représente un groupe aryle constitué de 7 atomes de carbone, un groupe diaryle constitué de 13 atomes de carbone, les deux groupes aryle étant liés par un atome de carbone, un groupe di(cycloalkyl) constitué de 13 atomes de carbone les deux groupes cycloalkyl étant liés par un atome de carbone, un groupe alkyl constitué de 6 atomes de carbones ;
R₂ représente un groupe polyoléfine, polyéther, polyester;
R₃ représente un groupe alkyl de 4 carbones ;
X₂ et X₃ représentent un atome O ;
x est un nombre compris entre 0 et 1.

De préférence, le composé de formule (IIIa) correspond à la formule développée suivante : 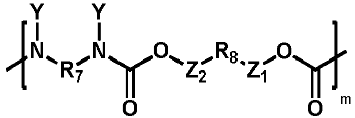 ou la formule suivante : 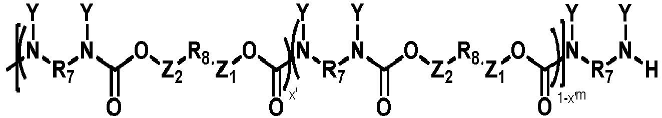 dans laquelle :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange de ceux-ci ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyether ou un mélange de ceux-ci ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
Z₁ et Z₂ représentent les motifs suivants : 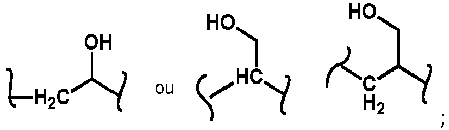
m est un nombre compris entre 0 et 1 ; et
x' est un nombre compris entre 0 et 1.

De préférence encore, le composé de formule (IIIa), est tel que : 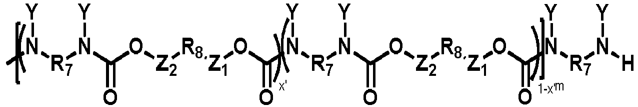 dans lequel :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange de ceux-ci ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)2-, -C(O)-, -C(Alkyl en C1-C6)2- dans lequel le groupe alkyl est optionnellement substitué par un groupe -OH, un groupe polyether ou un mélange de ceux-ci ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio. ;
Z₁ et Z₂ représentent les motifs suivants : 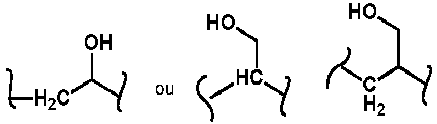
m est un nombre compris entre 0 et 1 ;
x' est un nombre compris entre 0 et 1 ;

Cette formule développée vise à éclairer la représentation de (IIIa) notamment la présence de Y.

De préférence, le composé de formule (IIIa) correspondant à la formule développée suivante : 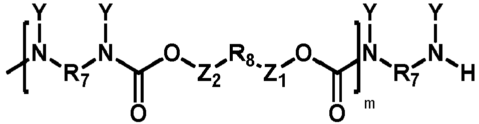 R₇ représente un groupe alkyl ou alcoxyle constitué de 2 à 15 atomes de carbones, un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone,bles dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange de ceux-ci ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)2-, -C(O)-, -C(Alkyl en C1-C6)2- dans lequel le groupe alkyl est optionnellement substitué par un groupe -OH, un groupe polyether ou un mélange de ceux-ci ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
Z₁ et Z₂ représentent les motifs suivants 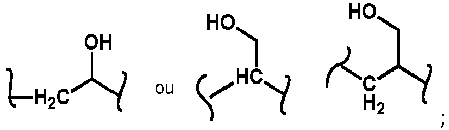 m est un nombre compris entre 0 et 1.

De préférence, le composé de formule (IIIa) est représenté par la formule développée 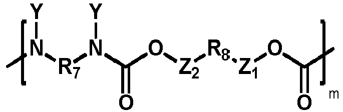 ou la formule : 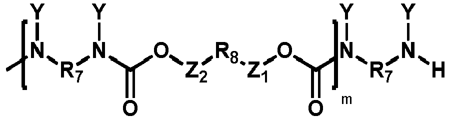 ou la formule : 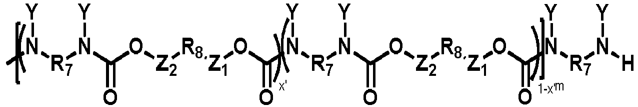 dans laquelle :
R₇ représente un groupe alkyl ou alcoxyle constitué de 2 à 15 atomes de carbones, un groupe aryle constitué de -7 atomes de carbone, un groupe diaryle constitué de 13atomes de carbone, les deux groupes aryle étant liés par un atome de carbone, un groupe cyclo alkyl constitué de 6 atomes de carbones, n, un groupe polyether ;
R₈ représente un groupe alkyl composé de 1 à 80 atomes de carbones dans lequel un ou plusieurs carbones sont optionnellement remplacés par un atome O, -OC(O)-, un carbone supportant deux chaînes alkyles dans lequel la chaîne alkyle fait 1 à 6 atomes de carbone, un groupe aryle, un groupe diaryle ;
Y représente indépendamment un hydrogène, un alkyl comprenant 1 à 6 atomes de carbone, ou un arylalkyle,
Z₁ et Z₂ représentent les motifs suivants 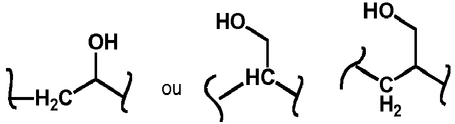
m est un nombre compris entre 0 et 1 ; et
x' est un nombre compris entre 0 et 1.

De préférence, le composé de formule (IIIa) :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 2 à 15 atomes de carbones ;
R₈ représente un groupe alkyl dans lequel un atome de carbone est remplacé par un atome d'oxygène ;
Y représente indépendamment un atome d'hydrogène et un alkyl comprenant 1 à 6 atomes de carbone ;
Z₁ et Z₂ représentent :

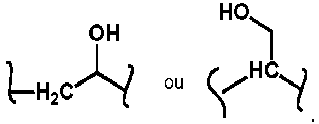

De préférence, pour les polymères de formule (IIIa) les définitions des groupes R₇, R₈, Z₁ et Z₂ sont telles que définies précédemment à l'exception de Y qui représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio et dans laquelle tous les groupes Y de ladite formule (IIIa) ne peuvent être simultanément un hydrogène.

Les composés de formule (IIIa) peuvent être obtenus par une réaction entre un composé de type bicarbonate cyclique et un composé Diamine, tel que décrit par exemple dans l'article de Maisoneuve et al Chem. Rev. 2015, 115, 22, 12407-12439*,* selon le schéma réactionnel suivant :

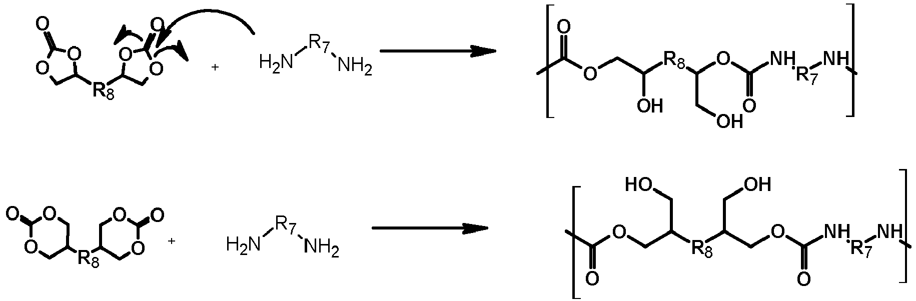

Le mélange au sein de l'extrudeur réacteur selon le procédé de l'invention conduit à la formation à partir d'un composé de formule (IIIa) et d'un composé de formule (I) à un composé de formule (II) qui a pour formule développée la formule suivante : 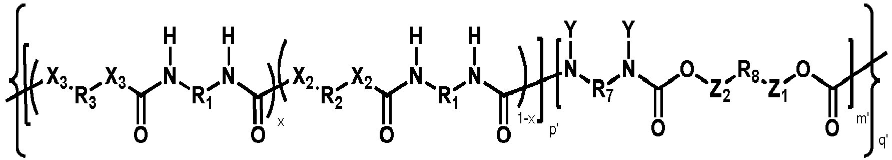 dans laquelle :
R₁ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH-, nitro, thioalkyle, alkylthio ;
R₂ représente un groupe polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, N-H, ou un groupe - CH=CH-, un groupe -O-C(O)-, un groupe éthynyl ;
X₂ et X₃ représente un atome O, S, un groupe N-H ou un mélange O / N-H / S ;
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)2-, -C(O)-, -C(Alkyl en C1-C6)2- dans lequel le groupe alkyl est optionnellement substitué par un groupe -OH, un groupe polyether ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio
Z₁ et Z₂ représentent les motifs suivants : 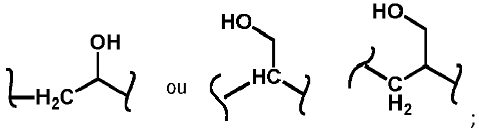
x est un nombre compris entre 0 et 1.

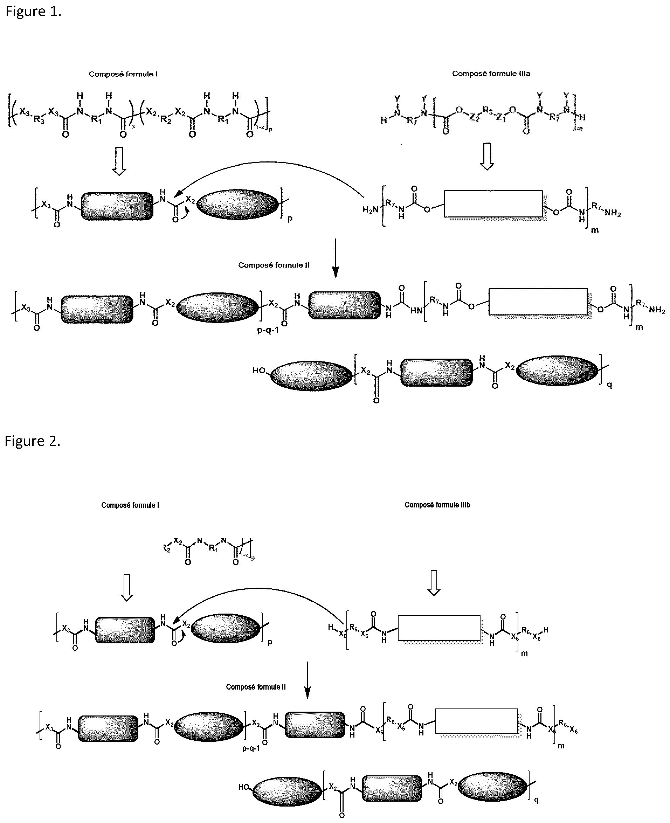

Dans un exemple non limitatif le composé de formule (IIIa) réagit au sein de l'extrudeur réacteur avec une partie du composé de formule (I) pour donner un composé de formule (II) via une réaction d'échange selon le schéma réactionnel décrit en figure 1.

De préférence, relativement au composé de formule (II) :
R₁ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH-, nitro, thioalkyle, alkylthio ;
R₂ représente un groupe polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, N-H, ou un groupe - CH=CH-, un groupe -O-C(O)-, un groupe éthynyl ;
X₂ et X₃ représente un atome O, S, un groupe N-H ou un mélange O / N-H / S ;
R₇ représente un groupe aryle constitué de 6 à 10 atomes de carbone, un groupe diaryle constitué de 6 à 10 atomes de carbone les deux groupes aryle étant liés directement ou par au moins un atome de carbone, un groupe cyclo alkyl constitué de 6 à 10 atomes de carbones, un groupe cyclo alkyl constitué de 6 à 10 atomes de carbone les deux groupes cyclo alkyl étant liés directement ou par au moins un atome de carbone un groupe alkyl constitué de 6 à 15 atomes de carbones, les dits groupe aryle et cyclo alkyl étant optionnellement substitué par au moins un substituant sélectionné parmi les groupes alkyl, hydroxy, hydroxyalkyl, alkyloxy, halogène, cyano, -SH-, nitro, thioalkyle, alkylthio ;
R₈ représente un groupe alkyl composé de 1 à 80 atomes de carbones dans lequel au moins un carbone est remplacé par un atome O, N, -O-C(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, -SH-, Nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, -SH-, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
Z₁ et Z₂ représentent les motifs suivants : 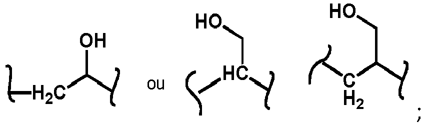
x est un nombre compris entre 0 et 1.

De manière encore plus préférée :
R₁ représente un groupe aryle constitué de 7 atomes de carbone, un groupe diaryle constitué de 6 à 15 atomes de carbone, préférentiellement 13 atomes de carbones, les deux groupes aryle étant liés directement par un atome de carbone, un groupe cyclo alkyl constitué de 6 à 10 atomes de carbones ;
R₂ représente un groupe polyéther, polycarbonate, polyester;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, N-H, ou un groupe - CH=CH-, un groupe -O-C(O)-, un groupe éthynyl ;
X₂ et X₃ représente un atome O ;
R₇ représente un groupe aryle constitué de 6 à 10 atomes de carbone, un groupe diaryle constitué de 6 à 10 atomes de carbone les deux groupes aryle étant liés directement ou par au moins un atome de carbone, préférentiellement 6 à 13 atomes de carbones, un groupe cyclo alkyl constitué de 6 à 10 atomes de carbone les deux groupes cyclo alkyl étant liés directement ou par au moins un atome de carbone, un groupe alkyl constitué de 6 à 15 atomes de carbones ;
R₈ représente un groupe alkyl composé de 1 à 80 atomes de carbones dans lequel au moins un carbone est remplacé par un atome O, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, -SH-, Nitro, Thioalkyle, Alkylthio, un groupe diaryle étant optionnellement substitué par au moins un substituant sélectionné parmi les groupes alkyl, hydroxy, hydroxyalkyl, alkyloxy, halogène, cyano, -SH-, nitro, thioalkyle, alkylthio, un groupe aryle, un groupe dicarboxyl aryle ;
Y représente indépendamment un hydrogène, un alkyl comprenant 1 à 6 atomes de carbone et dans laquelle tous les groupes Y de ladite formule (IIIa) ne peuvent être simultanément un hydrogène ;
Z₁ et Z₂ représentent les motifs suivants : 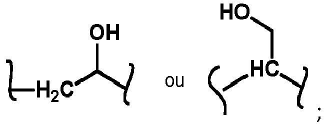
x est un nombre compris entre 0 et 1.

De préfrence, pour le composé de formule (II) les définitions des groupes R₁, R₂, R₃, X₂, X₃, x, R₇, R₈, Z₁ et Z₂ sont telles que définies précédemment à l'exception de Y qui représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, - SH, nitro, thioalkyle, alkylthio et dans laquelle tous les groupes Y de ladite formule (IIIa) ne peuvent être simultanément un hydrogène.

Un autre objet de l'invention correspond au composé de formule (IIIb) qui est un TPU différent du TPU de formule (I), représenté également par la formule -[uTPU']ₘ-présentant des fonctionnalités chimiques lui permettant de réagir avec le TPU formule (I). Par fonctionnalités chimiques lui permettant de réagir avec le TPU de formule (I) on entend préférentiellement une fonction amine secondaire et/ou amine primaire. Le composé de formule (IIIb) à la formule développée suivante : 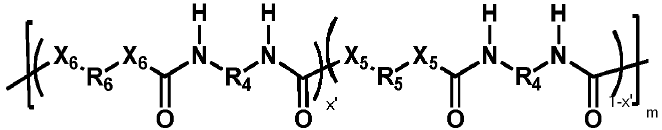 dans laquelle :
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH-, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacé par au moins un atome O, S, N-H, ou un groupe - CH=CH-, un groupe -O-C(O)-, un groupe éthynyl ;
R₆ représente une chaîne alkyle comprenant 1 à 6 atomes de carbone, un groupe polyoléfine, polysiloxane, polyéther, polycarbonate, polyester, un copolymère polyester-polyéther ou un mélange de ceux-ci ;
X₅ représente un atome O ou N- Y₁ ou un mélange O / N- Y₁ ;
X₆ représente un atome O ou N- Y₁ ou un mélange O / N- Y₁ ;
Y₁ représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH-, nitro, thioalkyle, alkylthio ;
x' est un nombre compris entre 0 et 1.

Le composé de formule (IIIb) peut également, de préférence, avoir la formule développée suivante : 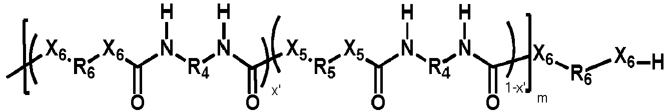 dans laquelle :
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH-, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacé par au moins un atome O, S, N-H, ou un groupe - CH=CH-, un groupe -O-C(O)-, un groupe éthynyl ;
R₆ représente une chaîne alkyle comprenant 1 à 6 atomes de carbone, un groupe polyoléfine, polysiloxane, polyéther, polycarbonate, polyester, un copolymère polyester-polyéther ou un mélange de ceux-ci ;
X₅ représente un atome O ou N-Y₁ ou un mélange O / N-Y₁ ;
X₆ représente un atome O ou N-Y₁ ou un mélange O / N-Y₁ ;
Y₁ représente indépendamment un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH-, nitro, thioalkyle, alkylthio ; et x' est un nombre compris entre 0 et 1.

De manière également préférée, concernant le composé de formule (IIIb)
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe alkyl constitué de 6 à 15 atomes de carbones, les dits groupe aryle et cyclo alkyl étant optionnellement substitués par au moins un substituant sélectionné parmi les groupes alkyl, hydroxy, hydroxyalkyl, alkyloxy, halogène, cyano, -SH, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacé par au moins un atome O, N-H ;
R₆ représente une chaîne alkyle comprenant 1 à 6 atomes de carbone, un groupe polyéther, polyester, un copolymère polyester-polyéther ou un mélange de ceux-ci ;
X₅ représente un atome O ou N-Y₁ ou un mélange O / N-Y₁ ;
X₆ représente un atome O ou N-Y₁ ou un mélange O / N-Y₁ ;
Y₁ représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, -SH ;
x' est un nombre compris entre 0 et 1.

De manière encore plus préférée :
R₄ représente un groupe aryle constitué de 6 à 10 atomes de carbone, un groupe diaryle constitué de 6 à 15 atomes de carbone, préférentiellement à 13 atomes de carbones, les deux groupes aryle étant liés directement par un atome de carbone, les dits groupe aryle et cyclo alkyl étant optionnellement substitués par au moins un substituant sélectionné parmi les groupes alkyl, hydroxy, hydroxyalkyl, alkyloxy, halogène, -SH ;
R₅ représente une chaîne alkyle comprenant 2 à 20 atomes de carbone dans laquelle un ou plusieurs carbones sont optionnellement remplacé par au moins un atome O, S, N-H, ou un groupe -CH=CH-, un groupe -O-C(O)-, un groupe éthynyl ;
R₆ représente une chaîne alkyle comprenant 1 à 6 atomes de carbone ;
R₆ représente un groupe polyéther, polyester, un copolymère polyester-polyéther ou un mélange de ceux-ci ;
X₅ représente un atome O ou N-Y₁ ou un mélange O / N-Y₁ ;
X₆ représente un atome O ou N-Y₁ ou un mélange O / N-Y₁ ;
Y₁ représente indépendamment un hydrogène, un alkyl comprenant 1 à 6 atomes de carbone ;
x' est un nombre compris entre 0 et 1.

De préférence, pour les polymères de formule les définitions des groupes R₄, R₅, R₆, X₅ et X₆ sont telles que définies précédemment à l'exception de Y₁ qui représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio et dans laquelle les groupes Y₁ de ladite formule ne peuvent être simultanément un atome d'hydrogène.

les composés de formule peuvent être formés à partir d'un polyol, d'un composé diisocyanate et une diamine selon le schéma réactionnel suivant

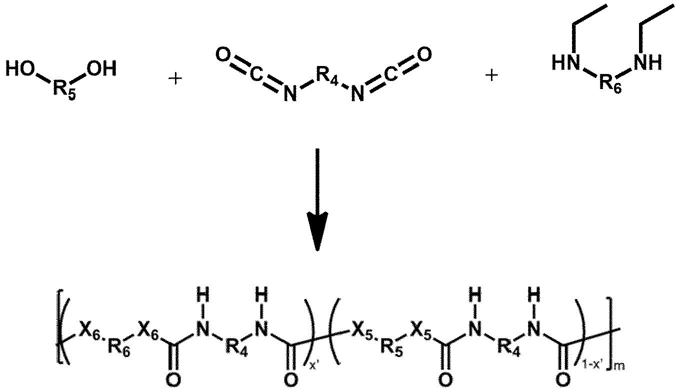

Les composés diols, diamine et diisocyanate sont introduits dans un ballon réactionnel en présence d'un solvant anhydre tel le tétrahydrofurane (THF), la solution est ensuite agitée pendant plusieurs jours. L'achèvement de la réaction est vérifié par spectroscopie infrarouge par la disparition du pic d'absorption de l'isocyanate. Une fois la réaction terminée, le solvant est évaporé. Le produit obtenu est alors dissous dans 20 ml de dichlorométhane, puis lavé avec 3 x 10 ml d'eau distillée. La phase organique résultante est séchée sous vide (103 mbar) à 70°C pendant 2 jours.

Une polymérisation en deux étapes peut être utilisée pour synthétiser ce type de polyuréthanes thermoplastiques élastomères. Les composés diols et diisocyanates sont introduits dans un premier temps dans un réacteur sous atmosphère inerte. Le mélange réactionnel est mis sous agitation à 100°C pendant 6h. La diamine est ensuite ajoutée à la même température pendant 5 min sous forte agitation. Le polymère est ensuite versé dans un moule, puis positionné dans une cloche à vide chauffante (four sous vide) à 100°C pendant 24h.

D'autres méthode de préparation des composés peuvent être envisagées comme décrit dans l'article de Rueda-Larraz, L. et al « Synthesis and Microstructure-Mechanical Property Relationships of Segmented Polyurethanes Based on a PCL-PTHF-PCL Block Copolymer as Soft Segment ». European Polymer Journal 45, no 7 (juillet 2009): 2096-2109 ou encore décrit dans le brevet CA2039393C.

Bien entendu en fonction de l'isocyanate, du diol et de la diamine utilisé, l'homme de l'art dans la synthèse des polyuréthanes pourra adapter les conditions expérimentales telles que le solvant utilisé, la durée de réaction ou encore la température.

Le mélange au sein de l'extrudeur réacteur selon le procédé de l'invention conduit à la formation à partir d'un composé de formule et d'un composé de formule (I) à un composé de formule (II) qui a pour formule développée la formule suivante : 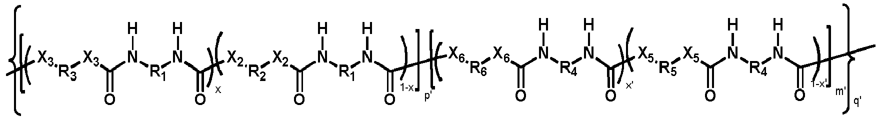 dans laquelle les groupes X₃, R₃, R₁, X₂, R₂, R₁, X₆, R₆, R₄, X₅, R₅, x et x' sont tels que décrits précédemment.

Un exemple sans être limitatif de composé de formule (II) obtenu au sein de l'extrudeur réacteur en présence d'un polymère de formule (I) et ayant une fonction terminal amine secondaire, peut être représenté selon le schéma réactionnel représenté par la figure 2.

Il est important également de noter dans le cadre de la présente invention, bien que l'on sache de quels produits de départ nous partons lors de la mise en œuvre du procédé selon l'invention. La résultant de la mise en œuvre du procédé conduit à un produit comprenant un TPU de formule (I) et un nouveau polymère de formule (II) en mélange. Le produit de formule (II) étant la résultante de la réaction d'échange entre le composé de formule (I) avec le composé de formule (IIIa) ou (IIIb). Le site où se produit la réaction d'échange au sein du polymère de formule (I) n'est pas forcément toujours le même et peut se produire à différents endroits du polymère, ainsi statistiquement nous obtenons une pluralité de composés de formule (II) différents, difficilement représentable mais issus de la même réaction d'échange. Ainsi tel que représenté dans la présente demande, le composé de formule (II) est une des éventualités possibles parmi la multitude de composés de formule (II) présents dans la composition finale. Mais elle n'en demeure pas néanmoins parfaitement compatible au regard de la complexité du mélange avec une définition de la composition résultante sous la forme d'un produit obtenu par la mise en œuvre du procédé selon l'invention.

La composition obtenue par la mise en œuvre du procédé selon l'invention peut après formulation et ou mise en forme faire tout ou partie d'un dispositif ou de pièces au sein d'un système. Le Dispositif ou les pièces obtenues pouvant se présenter sous forme de joint, de câbles, de pièces automobiles, de moules, de protection pour écrans mobiles ou fixes, de protection pour écrans mobiles ou fixes, de bandes transporteuses, de protections anti-chocs, de gants professionnels, de revêtements, notamment anti-corrosion, des métaux, ou d'additifs dans le domaine des adhésifs, bitumes, liants organiques, peintures, vernis, pâtes et mastics

Un autre objet de l'invention est l'utilisation d'une composition de polymères obtenue par la mise en œuvre du procédé selon l'invention dans la fabrication de dispositif ou pièces tels que décrits au paragraphe précédent.

La présente invention va être illustrée avec des exemples de réalisation permettant d'obtenir par la mise en œuvre du procédé selon l'invention, une composition comprenant un composé de formule (I) en mélange avec un composé de formule (II).

### Exemples de composition obtenues par la mise en œuvre du procédé selon l'invention

### Composés de formule (I) thermoplastiques élastomères polyuréthanes (TPU) :

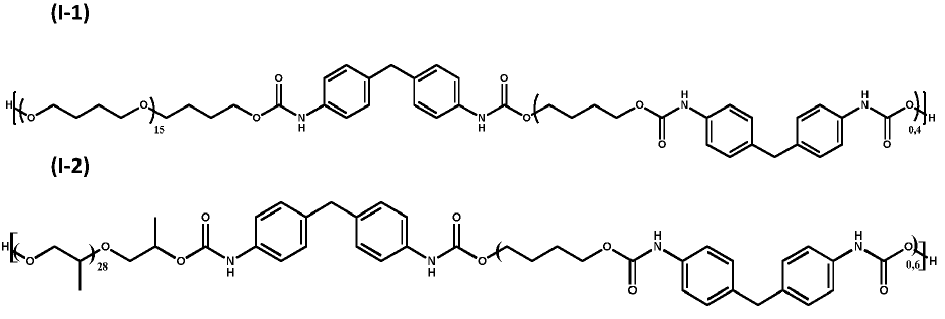

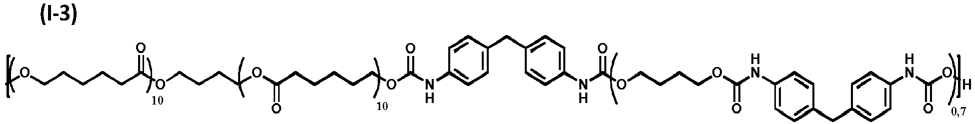

Les matrices TPU (I-1) et (I-2) sont des polymères commerciaux de la famille des polyéthers aromatiques et (I-3) de la famille des polyesters aromatiques.

### L'appareillage :

La synthèse des additifs ainsi que les réactions d'échanges sont réalisées en voie fondue. Un des procédés pouvant être utilisé pour la réalisation de ces réactions est l'extrusion réactive. Le système HAAKE MiniLab II de Thermo Fisher Scientific a fait l'objet des exemples de ce brevet.

Cet appareil a les caractéristiques techniques suivantes :
***Moteur** :*
   Puissance : 400 W
   Plage vitesse : 1 - 360 min-1
   Couple max : 5Nm/vis
   Alim. : 230V±10%, 50/60Hz
***Extrudeuse** :*
   Design : conique co&contre rotative
   Température : max. 350°C
   Barril : acier inoxydable (HRC55)
   Vis : acier inoxydable 1.4122
   Refroidissement : air/eau
   Pression max : 200 bar
   Volume : 7cm³ (e. 5g PE)
   Bypass : automatique
   Remplissage : pneumatique/manuel/force feeder

### Exemple 1 : Préparation d'une composition de TPU modifiée par voie fondue II-1

### 1.1 Préparation d'un matériau polymère répondant à la formule (IIIa)-1

Un matériau polymère de formule (IIIa)-1 suivante : 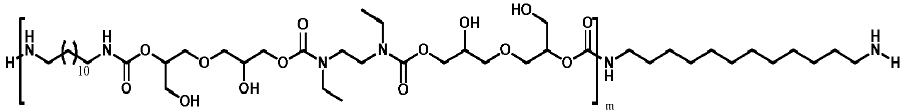 a été préparé de la façon suivante :
Dans une extrudeuse de type HAAKE Minilab II nettoyée au préalable avec du polyéthylène pendant 5 minutes à 190°C à 25tr/min, un mélange diglycerol-dicarbonate (2,70g ; 12,4 mmol) et N,N'-diethylethylènediamine (0,77g ; 6,64 mmol) a été introduit dans l'extrudeuse chauffée à 80°C à une vitesse de rotation de 25tr/min. Après 3min dans ces conditions, le mélange a été maintenu à 100tr/min pendant toute la réaction. Après 45min, la température a été augmentée à 85°C pendant 15min, puis à 90°C pendant 15min, puis à 95°C. Après 60min à 95°C, 1,12-dodecanediamine (1,26g; 6,30mmol) a été ajoutée au milieu réactionnel. La réaction a été stoppée 240min plus tard en extrudant le produit obtenu (FLUSH mode). Un solide brun (3,8g) est récupéré en sortie d'extrudeuse.

### 1.2 Préparation du TPU modifié par voie fondue (de la composition auto-cicatrisante) répondant à la formule (II)-1

Dans une extrudeuse de type HAAKE Minilab II nettoyée au préalable avec du polyéthylène pendant 5 minutes à 190°C à 25tr/min, 3,01g de matrice TPU (I-1) a été introduit dans l'extrudeuse chauffée à 200°C à une vitesse de rotation de 25tr/min. Après 5min dans ces conditions, 1,54 g de composition de formule (IIIa)-1 a été introduit à 25tr/min. Après introduction des deux composants, la vitesse a été augmentée à 100tr/min. Après 10min d'échange à 200°C, la réaction a été stoppée en extrudant le produit obtenu (FLUSH mode). Un solide brun (4g) a été récupéré en sortie d'extrudeuse.

### Exemple 2 : Préparation d'une composition de TPU modifiée par voie fondue II-2

### 2.1 Préparation d'un matériau polymère répondant à la formule (IIIa)-2

Un matériau polymère de formule (IIIa)-2 suivante : 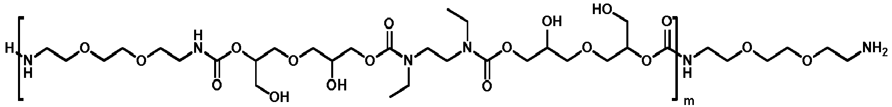 a été préparé de la façon suivante :
Dans un réacteur équipé d'une pale d'agitation en verre, d'un bain d'huile à 80°C, 4.03 g (18 mmol, 1eq) de diglycérol dicarbonate, 1.13g (9.76 mmol, 0.53eq) et 5%mol de LiBr sont ajoutés sous atmosphère inerte (Ar). Le flux d'argon est stoppé et mis de manière statique pour le reste de la réaction. Le milieu réactionnel est liquide transparent à 80°C. L'agitation est maintenue à 100tr/min. Après 45min à 80°C, la température est augmentée à 85°C pour 15min puis à 90°C pour 15 min. 1,45g (9.81 mmol, 0,53 eq) de Jeffamine EDR148 est ajouté au milieu réactionnel puis la température est augmentée à 95°C jusqu'à la fin de la réaction. 2h après le palier à 95°C, la réaction est arrêtée. Un solide brun orangé est obtenu. (3.9g).

### 2.2 Préparation du TPU modifié par voie fondue (de la composition auto-cicatrisante) répondant à la formule (II)-2

Dans une extrudeuse de type HAAKE Minilab II nettoyée au préalable avec du polyéthylène pendant 5 minutes à 190°C à 25tr/min, 3.00g de matrice TPU (I-1) a été introduit dans l'extrudeuse chauffée à 200°C à une vitesse de rotation de 25tr/min. Après 5min dans ces conditions, 1,50 g de composition de formule (IIIa)-2 a été introduit à 25tr/min. Après introduction des deux composants, la vitesse a été augmentée à 100tr/min. Après 10min d'échange à 200°C, la réaction a été stoppée en extrudant le produit obtenu (FLUSH mode). Un solide brun (4g) a été récupéré en sortie d'extrudeuse.

### Exemple 3 : Caractérisations physico-chimiques des compositions TPU auto-cicatrisantes (II)-1 et (II)-2 conformes à l'invention

Le module d'Young (en MPa), la contrainte à la rupture (en MPa) et l'allongement à la rupture (en %) ont été déterminées grâce à un essai de traction réalisé à une vitesse de déplacement de 20mm/min sur des éprouvettes de géométrie de type lanière, à l'aide d'un appareil vendu sous la dénomination commerciale INSTRON 5965 par la société Instron de la façon suivante : les valeurs de la contrainte à la rupture ainsi que l'allongement à la rupture ont été mesurés directement lors de la rupture du matériau. En ce qui concerne le module d'Young, la valeur a été déterminée par analyse de la pente de la courbe de traction entre 5 et 10 pourcents de déformation.

Les éprouvettes sont obtenues par moulage par injection, et subisse un traitement thermique de 20h à 80°C avant chaque essai mécanique.

Le caractère auto-cicatrisant a été démontré de la façon suivante :
- soit par suivi visuel de fermeture d'une entaille,
- soit par recouvrance de la contrainte à la rupture à un temps donné, d'un échantillon de type éprouvette lanière, coupée au milieu de la zone utile puis dont les deux moitiés sont directement (t<20sec) remises en contact manuellement pendant 2 minutes.

Le tableau ci-dessous répertorie les valeurs de module d'Young, contrainte à la rupture et allongement à la rupture, avant coupure et après coupure de la matrice élastomères TPU (I-1). De plus, le temps d'auto-cicatrisation (en heures) et le pourcentage d'auto-cicatrisation (en %) sont mentionnés pour chaque composition.

| Compositions | Temps d'auto-cicatrisation (h) | % d'auto-cicatrisation | Module d'Young (MPa) | Contrainte à la rupture (MPa) | Allongement à la rupture (%) |
|---|---|---|---|---|---|
| (I-1) | 48 | 0 | 7.5 | 17 | 607 |

Les compositions (II) synthétisées quant a elles montrent des propriétés d'auto cicatrisation étonnantes, en effet le fait de couper la composition façonnée sous forme de bandes, et d'assembler à nouveau les morceaux obtenus, en y appliquant une pression, suffit à cicatriser la composition II ainsi obtenue.

Dans les exemples, la masse molaire des polymères peut être mesurée par la méthode dite SEC pour « Size exclusion chromatography ».

Les mesures de chromatographie d'exclusion de taille (SEC) peuvent par exemple être effectuées avec trois PL Gel Mixte C en utilisant des colonnes de 5 µm (produits commerciaux de la société Agilent) (7,5 x 300 mm ; ayant des limites de séparation : 0,2 à 2000 kg. Mol-1) maintenues à 40°C, couplées à un module de distribution de solvant et à un détecteur d'échantillons Viscoteck 3580 à indice différentiel de réfraction (IR). La phase mobile utilisée est composée de THF, à un débit de 1 ml. Min-1, et du toluène a été utilisé comme marqueur de débit. Les polymères selon l'invention sont généralement injectés (100 µL) à une concentration de 5 mg.ml-1 après filtration à travers une membrane de 0,45 microns. Un appareil d'analyse des données OMNISEC peut être utilisé pour l'acquisition et l'analyse des données. Les Masses molaires (Mn, masse molaire moyenne en nombre, Mw, masse molaire moyenne en poids) et la dispersité (= Mw / Mn) sont dérivées d'une courbe d'étalonnage basée sur les standards de polystyrène (PS) de Polymer Standards Service.

D'autres techniques que la technique de RMN peut également être utilisée afin de caractériser les compositions selon l'invention. Dans le cadre de l'invention la combinaison des techniques SEC et RMN permettent de caractériser un mélange aussi complexe, la SEC permettant d'obtenir la masse molaire et la RMN de voir l'évolution de la réaction d'échange et la proportion des différents composés dans le mélange.

Les exemples décrits dans la présente demande sont donnés à titre illustratif et ne limitent en rien la portée de l'invention.

## Revendications

1. Procédé de préparation d'une composition de polymères comprenant une étape de mélange d'un premier polymère thermoplastique polyuréthane (TPU) non auto-cicatrisant avec un second polymère polyuréthane auto-cicatrisant, à une température suffisante pour provoquer le changement de microstructure desdits polymères pendant une durée supérieure ou égale à 1 minute.

2. Procédé de préparation d'une composition de polymères selon la revendication 1, dans lequel le second polymère thermoplastique polyuréthane auto-cicatrisant est sélectionné parmi au moins un second polymère thermoplastique polyuréthane différent du premier polymère (TPU') et un second polymère non isocyanate polyuréthane (NIPU), ledit second polymère non isocyanate polyuréthane ne comportant pas de fonction isocyanate et n'étant pas préparé à partir de composé comprenant un groupement isocyanate.

3. Procédé de préparation d'une composition de polymères selon la revendication 2, comprenant les étapes suivantes :
i. mélanger au sein d'un extrudeur comprenant un réacteur continu le premier polymère thermoplastique polyuréthane (TPU) en présence d'un polymère sélectionné parmi le second polymère thermoplastique polyuréthane différent du premier polymère thermoplastique polyuréthane (TPU') et le second polymère polyuréthane non isocyanate (NIPU)
ii. porter le mélange à une température comprise entre 150 et 250 °C ;
iii. maintenir le mélange au sein du réacteur pendant une durée de 1 min à 60 minutes ; et
iv. récupérer à la sortie de l'extrudeur le mélange obtenu.

4. Procédé selon l'une des revendication 2 ou 3, dans lequel le premier polymère thermoplastique a pour formule, la formule (I) : p étant tel que la masse molaire moyenne en nombre Mn du polymère est comprise entre 1 et 500 kg/mol 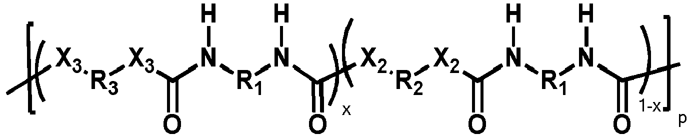 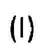 dans laquelle :
R₁ représente un groupe aryle constitué de 6 à 30 atomes de carbone, un groupe diaryle constitué de 6 à 15 atomes de carbone, préférentiellement 6 à 13 atomes de carbone, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 4 à 15 atomes de carbones, lesdits groupe aryle et cyclo alkyl étant optionnellement substitué par au moins un substituant sélectionné parmi les groupes alkyl, alkyloxy, halogène, cyano, nitro, thioalkyl, alkylthio ;
R₂ représente un groupe polyoléfine, polysiloxane, polyéther, polycarbonate, polyester, un copolymère polyester-polyéther ou un mélange de ceux-ci ; R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, ou un groupe -CH=CH-, un groupe -O-C(O)-, un groupe éthynyl ;
X₂ et X₃ représentent indépendamment au moins un élément sélectionné parmi un atome O, un atome S et un groupe N-H ; et
x est un nombre compris entre 0 et 1.

5. Procédé selon l'une quelconque des revendications 2 à 4 dans lequel le second polymère thermoplastique polyuréthane a pour formule la formule (IIIb) : 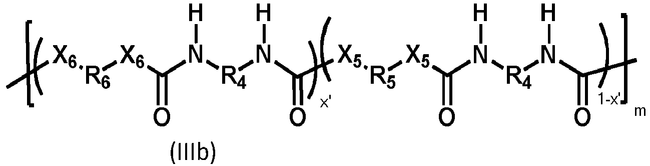 dans laquelle :
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacés par au moins un atome O, S, ou un groupe -CH=CH-, un groupe -O-C(O)-, un groupe ethynyl ;
R₆ représente une chaîne alkyle comprenant 1 à 6 atomes de carbone, groupe polyoléfine, polysiloxane, polyéther, polycarbonate, polyester, un copolymère polyester-polyéther ou un mélange de ceux-ci ;
X₅ représente au moins un élément sélectionné parmi un atome O et le groupe N-Y₁ ;
X₆ représente au moins un élément sélectionné parmi un atome O et le groupe N-Y₁ ;
Y₁ représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
x' est un nombre compris entre 0 et 1 ;
et le second polymère non isocyanate polyuréthane a pour formule la formule (IIIa) : 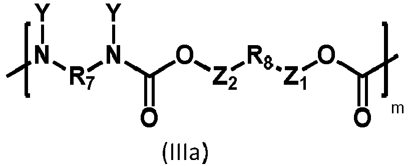
dans laquelle :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones,
un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyether ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
et tel que Z₁ et Z₂ représentent les motifs suivants :

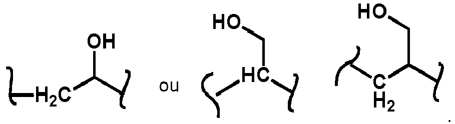

6. Procédé selon la revendication 5, dans lequel lesdits polymères polyuréthane de formule (IIIb) comportent au moins une fonction terminale, telle que :

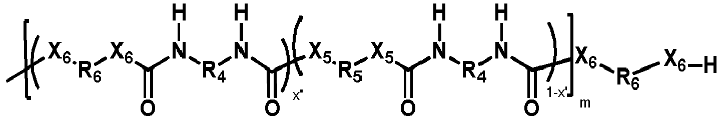

7. Procédé selon l'une des revendications 5 ou 6, dans lequel lesdits polymères polyuréthane de formule (IIIa) comportent au moins une fonction terminale, telle que :

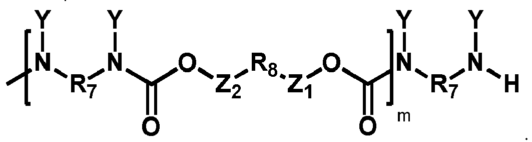

8. Procédé selon l'une quelconque des revendications précédentes, dans lequel le second polymère est présent à hauteur de 0,05 à 80% en poids par rapport au poids du premier polymère thermoplastique, préférentiellement de 0,05 à 60%, encore plus préférentiellement de 0.05 à 40%, voire de 0.05 à 30%.

9. Procédé selon l'une quelconque des revendications 5 à 8, dans lequel une partie du polymère selon la formule (I) réagit avec les composés de formule (IIIa) ou (IIIb) et subit une réaction d'échange.

10. Composition obtenue par la mise en œuvre du procédé selon l'une quelconque des revendications précédentes comprenant en mélange : un polymère thermoplastique polyuréthane de formule (I) 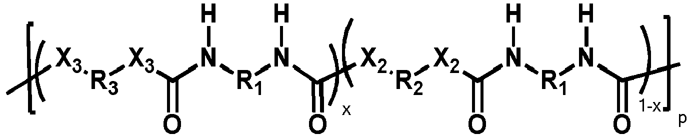 et un second polymère de formule (II) choisi parmi au moins l'un des polymères de formule suivante : 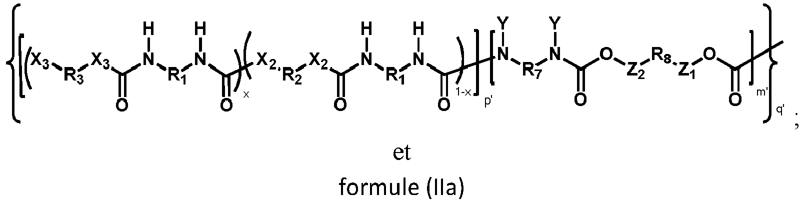 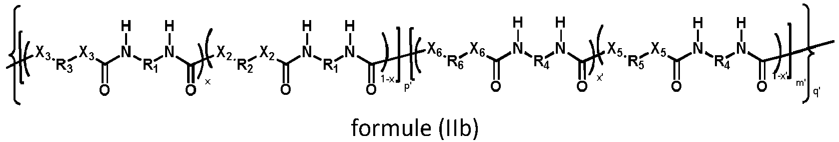 dans laquelle pour le polymère de formule (I)
R₁ représente un groupe aryle constitué de 6 à 30 atomes de carbone, un groupe diaryle constitué de 6 à 15 atomes de carbone, préférentiellement 6 à 13 atomes de carbone, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 4 à 15 atomes de carbones, les dits groupe aryle et cyclo alkyl étant optionnellement substitué par au moins un substituant sélectionné parmi les groupes alkyl, alkyloxy, halogène, cyano, nitro, thioalkyl, alkylthio ;
R₂ représente un groupe polyoléfine, polysiloxane, polyéther, polycarbonate, polyester, un copolymère polyester-polyéther ou un mélange de ceux-ci ;
R₃ représente un groupe cycloalkyl ou aryl ou une chaîne alkyle ou comprenant 2 à 20 atomes de carbone dans laquelle au moins un atome de carbone est optionnellement remplacé par au moins un atome O, S, ou un groupe -CH=CH-, un groupe -O-C(O)-, un groupe ethynyl ;
X₂ et X₃ représentent indépendamment au moins un élément sélectionné parmi un atome O, S et un groupe N-H ; et
x est un nombre compris entre 0 et 1 ;
et dans laquelle :
R₄ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl constitué de 6 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio ;
R₅ représente un groupe cycloalkyl ou aryl ou une chaîne alkyle ou comprenant 2 à 20 atomes de carbone dans laquelle un ou plusieurs carbones sont optionnellement remplacés par au moins un atome O, S, ou un groupe -CH=CH-, un groupe -O-C(O)-, un groupe éthynyl ;
R₆ représente une chaîne alkyle comprenant 1 à 6 atomes de carbone, groupe polyoléfine, polysiloxane, polyéther, polycarbonate, polyester, un copolymère polyester-polyéther ou un mélange de ceux-ci ;
X₅ représente au moins un élément sélectionné parmi un atome O et la fonction N-Yi;
X6 représente au moins un élément sélectionné parmi un atome O et la fonction N-Yi;
Y₁ représente indépendamment un hydrogène, un alkyl comprenant 1 à 6 atomes de carbone, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio ;
x' est un nombre compris entre 0 et 1 ;
et dans laquelle :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange ;
R8 représente un groupe alkyl composé de 1 à 80 atomes de carbones dans lequel un ou plusieurs carbone sont optionnellement remplacés par un atome O, -O-C(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyéther ou un mélange ;
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio, Z₁ et Z₂ représentent les motifs suivants :

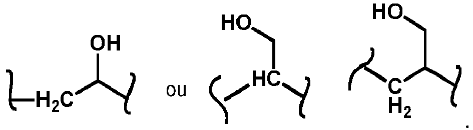

11. Composition selon la revendication 10, dans laquelle le polymère de formule (IIa) comporte un groupement terminal -NY-R₇-NY-H, tel que:

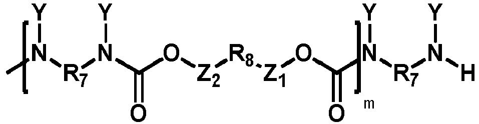

12. Composition selon l'une des revendications 10 ou 11 dans laquelle polymère thermoplastique de formule (IIb) comporte un groupement terminal -X₆-R₆-X₆-H, tel que:

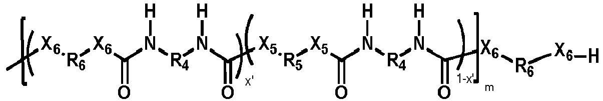

13. Composition de polymères selon l'une des revendications 10 ou 12 obtenue par la mise en œuvre du procédé selon l'une quelconque des revendications 1 à 9, comprenant un composé de formule (I) et un composé de formule (II) dans laquelle le composé de formule (II) est issu d'un mélange entre le polymère de formule (I) qui a subi une réaction d'échange avec le polymère de formule (IIIa) et le polymère de formule (I) qui a subi une réaction d'échange avec le polymère de formule (IIIb) ; et pour lequel p et m' et p' sont tels que la masse molaire moyenne en nombre Mn des polymères présents dans la composition est comprise entre 1 et 500 kg/mol.

14. Composition selon l'une quelconque des revendications 10 à 13 pouvant contenir en outre au moins un antioxydant, un agent de démoulage, un pigment, un ignifugeant, une charge inorganique, notamment choisi parmi la silice, préférentiellement sous forme de quartz, le talc, le carbonate de calcium, le noir de carbone, et un de leurs mélanges

15. Dispositif ou pièces pour système constitué(es) en toute ou partie par une composition selon l'une des quelconque des revendications 10 à 14.

16. Dispositif ou pièces selon la revendication 15 se présentant sous forme de joint, de câbles, de revêtement, de pièces automobiles, de moules, de protection pour écrans mobiles ou fixes, de bandes transporteuses, de protections anti-chocs, de gants professionnels, de revêtements, notamment anti-corrosion, des métaux, ou d'additifs dans le domaine des adhésifs, bitumes, liants organiques, peintures, vernis, pâtes et mastics

17. Utilisation d'une composition selon l'une quelconque des revendications 10 à 14 dans la fabrication de dispositif ou pièces selon les revendications 15 ou 16.

18. Composé de formule (IIIa) comportant ou non une fonction terminale -NY-R₇-NY-H, tel que : 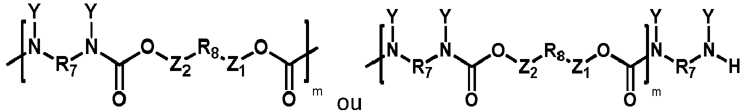 dans lequel :
R₇ représente un groupe aryle constitué de 6 à 10 atomes de carbone, un groupe diaryle constitué de 6 à 15 atomes de carbone, préférentiellement 6 à 13 atomes de carbones, les deux groupes aryle étant liés directement ou par au moins un atome de carbone, un groupe cyclo alkyl constitué de 6 à 10 atomes de carbones, un groupe di(cycloalkyl) constitué de 6 à 15 atomes de carbone les deux groupes cycloalkyl étant liés directement ou par au moins un atome de carbone, un groupe alkyl ou alcoxyle constitué de 2 à 15 atomes de carbones, les dits groupe aryle et cyclo alkyl étant optionnellement substitués par au moins un substituant sélectionné parmi les groupes alkyl, alkyloxy, halogène, cyano, nitro, thioalkyle, alkylthio, un groupe polyether ou un mélange ;
R₈ représente un groupe alkyl composé de 1 à 80 atomes de carbones dans lequel un ou plusieurs carbone sont optionnellement remplacés par un atome O, -OC(O)-, -C(O)-, un groupe hydroxy alkyl dans lequel la chaîne alkyle fait 1 à 6 atomes de carbone, un carbone supportant deux chaînes alkyles dans lequel la chaîne alkyle fait 1 à 6 atomes de carbone, un groupe thioalkyle dans lequel la chaîne alkyle fait 1 à 6 atomes de carbone, un groupe aryle étant optionnellement substitué par au moins un substituant sélectionné parmi les groupes alkyl, hydroxy, hydroxyalkyl, alkyloxy, halogène, cyano, nitro, thioalkyle, alkylthio, un groupe diaryle étant optionnellement substitué par au moins un substituant sélectionné parmi les groupes alkyl, hydroxy, hydroxyalkyl, alkyloxy, halogène, cyano, nitro, thioalkyle, alkylthio, un groupe aryle, un groupe dicarboxyl aryle, un groupe diaryle dont les deux aryles sont liés par un groupement -S(O)₂-, -C(O)-, -C(Alkyl en C₁-C₆)₂- dans lequel le groupe alkyl est optionnellement substitué par un groupe -OH, un groupe polyether ou un mélange.
Y représente indépendamment un hydrogène, un alkyl comprenant 1 à 6 atomes de carbone, les groupes Y peuvent former le motif -CH₂-CH₂-, un aryle, ou un arylalkyle, le dit groupe aryle étant optionnellement substitué par au moins un substituant sélectionné parmi les groupes alkyl, hydroxy, hydroxyalkyl, alkyloxy, halogène, cyano, -SH, nitro, thioalkyle, alkylthio
Z₁ et Z₂ représentent les motifs suivants
